(19) Europäisches Patentamt
European Patent Office
Office européen des brevets

(11) **EP 2 550 443 B1**

(12) **EUROPÄISCHE PATENTSCHRIFT**

(45) Veröffentlichungstag und Bekanntmachung des Hinweises auf die Patenterteilung:
**03.01.2018 Patentblatt 2018/01**

(21) Anmeldenummer: **11708277.6**

(22) Anmeldetag: **15.03.2011**

(51) Int Cl.:
**F02D 41/24** $^{(2006.01)}$

(86) Internationale Anmeldenummer:
**PCT/EP2011/053888**

(87) Internationale Veröffentlichungsnummer:
**WO 2011/117114 (29.09.2011 Gazette 2011/39)**

(54) **VERFAHREN UND VORRICHTUNG ZUR ANPASSUNG VON ADAPTIONSWERTEN FÜR DIE ANSTEUERUNG VON EINSPRITZVENTILEN IN EINEM MOTORSYSTEM MIT MEHREREN EINSPRITZUNGSARTEN**

METHOD AND APPARATUS FOR ADAPTING ADAPTATION VALUES FOR ACTUATING INJECTION VALVES IN AN ENGINE SYSTEM HAVING A PLURALITY OF INJECTION TYPES

PROCEDE ET DISPOSITIF POUR ADAPTER DES VALEURS D'ADAPTATION POUR LA COMMANDE DE SOUPAPES D'INJECTION DANS UN SYSTEME DE MOTEUR AVEC DEUX TYPES D'INJECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2010 DE 102010003209**

(43) Veröffentlichungstag der Anmeldung:
**30.01.2013 Patentblatt 2013/05**

(73) Patentinhaber: **Robert Bosch GmbH**
**70442 Stuttgart (DE)**

(72) Erfinder:
• **SCHENCK ZU SCHWEINSBERG, Alexander**
 **71696 Moeglingen (DE)**
• **ROTH, Andreas**
 **75417 Muehlacker-Lomersheim (DE)**
• **JAKOBS, Kai**
 **70806 Kornwestheim (DE)**

(56) Entgegenhaltungen:
WO-A1-2007/099425     JP-A- 3 185 242
JP-A- 2005 048 730     JP-A- 2005 214 015
US-A1- 2009 299 611

**Beschreibung**

Technisches Gebiet

Die Erfindung betrifft Motorsysteme mit Verbrennungsmotoren, bei denen Zylindern Kraftstoff über mehrere Einspritzventile zuführbar ist, insbesondere über eine Saugrohreinspritzung und eine Direkteinspritzung.

Stand der Technik

Bei Verbrennungsmotoren, bei denen ein kombiniertes Einspritzsystem sowohl eine Saugrohreinspritzung als auch eine Direkteinspritzung ermöglicht, ist es notwendig, die Ansteuerung der dazu vorgesehenen Einspritzventile zu adaptieren. Die Adaption erfolgt so, dass die Einspritzventile so angesteuert werden können, dass eine durch eine Einspritzmengenangabe vorgegebene Kraftstoffmenge eingespritzt wird. Die Adaption erfolgt üblicherweise bei einem Betriebszustand, bei dem die Einspritzung entweder vollständig über das Saugrohr oder vollständig als Direkteinspritzung erfolgt. Dazu sind Adaptionsbereiche vorgegeben, die Bereiche für Betriebszustände des Verbrennungsmotors definieren, in denen eine Anpassung eines Adaptionswertes, mit dem die einzuspritzende Kraftstoffmenge beaufschlagt wird, zugelassen wird. Die ermittelten Adaptionswerte werden jedoch bei der Berechnung der Kraftstoffmenge immer einbezogen, auch wenn sich der aktuelle Betriebszustand des Verbrennungsmotors außerhalb des Adaptionsbereichs befindet. Die WO 2007/099425 A1 offenbart das Anpassen von Adaptionswerten für verschiedene Verbrennungsverfahren mit unterschiedlicher Verteilung der kombinierten Einspritzmenge. Aufgrund von Bauteiltoleranzen und -alterung ist es notwendig, die für die Adaption verwendeten Adaptionswerte regelmäßig oder zu vorgegebenen Zeitpunkten anzupassen. Eine Korrektur bzw. Anpassung des Adaptionswertes findet nach obigen Verfahren nur dann statt, wenn die betreffende Einspritzung entweder vollständig über das Saugrohr oder vollständig als Direkteinspritzung erfolgt. Soll die Adaption zu einem beliebigen Zeitpunkt vorgenommen werden, muß dafür der Betriebszustand angepasst werden, so dass dieser innerhalb des Adaptionsbereiches liegt. Insbesondere wird der Betriebszustand so verändert, dass der Verbrennungsmotor nahezu vollständig in der Betriebsart betrieben wird, für die der Adaptionswert angepasst werden soll. Dies hat jedoch zur Folge, dass ein an sich optimierter Betriebszustand des Verbrennungsmotors, der möglicherweise eine kombinierte Nutzung der Direkteinspritzung und der Saugrohreinspritzung vorsieht, verlassen werden muss. Dies ist nachteilig, insbesondere für den Kraftstoffverbrauch, die Abgaszusammensetzung und das Betriebsverhalten, wie es sich z.B. durch Klopfen des Verbrennungsmotors äußern kann.

Es ist daher Aufgabe der vorliegenden Erfindung, ein verbessertes Verfahren und eine Vorrichtung zur Adaption der Ansteuerung von Einspritzventilen bei Verbrennungsmotoren mit kombinierter Saugrohreinspritzung und Direkteinspritzung zur Verfügung zu stellen, wobei insbesondere die vollständige Umschaltung auf eine der Einspritzungsarten für die Anpassung des Adaptionswertes unterbleiben kann.

Offenbarung der Erfindung

Diese Aufgabe wird durch das Verfahren zum Anpassen von Adaptionswerten für Kraftstoff-Einspritzmengen gemäß Anspruch 1, das Verfahren zum Adaptieren von Einspritzmengenangaben zum Steuern einer Einspritzung von Kraftstoff in einen Verbrennungsmotor, das Steuergerät, das Motorsystem sowie das Computerprogrammprodukt gemäß den nebengeordneten Ansprüchen gelöst.

Weitere vorteilhafte Ausgestaltungen sind in den abhängigen Ansprüchen angegeben.

Gemäß einem ersten Aspekt ist ein Verfahren zum Anpassen von Adaptionswerten für die Adaption von Kraftstoff-Einspritzmengen eines Verbrennungsmotors vorgesehen, dem Kraftstoff durch einen Mischbetrieb von zwei Einspritzungsarten zuführbar ist. Ein erster Adaptionswert wird zum Adaptieren einer ersten Einspritzmengenangabe, gemäß der der Verbrennungsmotor mit einer ersten Einspritzungsart betrieben wird, und ein zweiter Adaptionswert zum Adaptieren einer zweiten Einspritzmengenangabe, gemäß der der Verbrennungsmotor mit einer zweiten Einspritzungsart betrieben wird, angepasst, wobei die Adaptionswerte jeweils in definierten, sich nicht überlappenden betriebszustandsabhängigen Adaptionsbereichen angepasst werden, wobei mindestens einer der Adaptionsbereiche Betriebszustände umfasst, bei denen dem Verbrennungsmotor in dem Mischbetrieb Kraftstoff durch beide Einspritzungsarten zugeführt wird.

Eine Idee der vorliegenden Erfindung besteht darin, die Anpassung des Adaptionswertes für die Ansteuerung des betreffenden Einspritzventils bei einem Verbrennungsmotor mit mehreren Einspritzungsarten dann durchzuführen, wenn ein Betriebszustand des Verbrennungsmotors innerhalb eines vorgegebenen Adaptionsbereiches liegt. Dies erfolgt ungeachtet, ob sich der Verbrennungsmotor in einem Mischbetrieb befindet.

Weiterhin entspricht die erste Einspritzungsart einer Saugrohreinspritzung und die zweite Einspritzungsart einer Direkteinspritzung, wobei die Anpassung des ersten Adaptionswertes bei Betriebszuständen durchgeführt wird, bei denen Kraftstoff sowohl durch Saugrohreinspritzung als auch durch Direkteinspritzung dem Verbrennungsmotor zugeführt wird. Weiterhin wird die Anpassung des zweiten Adaptionswertes bei Betriebszuständen durchgeführt, bei denen Kraftstoff zu mehr als 60%, 70%, 80%, 90% oder 95% durch Direkteinspritzung dem Verbrennungsmotor zugeführt wird. Es ist vorgesehen, dass die Anpassung des jeweiligen Adaptionswertes erfolgt, indem ein aktueller Adaptionswert für die betreffende Einspritzungsart ermittelt wird, und ein zuvor ermittelter Adaptionswert für die betreffende Einspritzungsart angepasst wird, indem der vorherige Adaptionswert mit dem ermittelten Adaptionswert für die betreffende Einspritzungsart, der mit einem Gewichtungsfaktor gewichtet wird, beaufschlagt wird.

Gemäß einem weiteren Aspekt ist ein Verfahren zum Adaptieren einer ersten Einspritzmengenangabe und einer zweiten Einspritzmengenangabe zum Steuern einer Einspritzung von Kraftstoff in einen Verbrennungsmotor vorgesehen, dem Kraftstoff durch einen Mischbetrieb von zwei Einspritzungsarten zugeführt werden kann. Abhängig von einem Betriebspunkt wird ein Aufteilungsmaß bereitgestellt, wobei eine vorgegebene Gesamtkraftstoffmenge, die für eine Verbrennung in einem Zylinder des Verbrennungsmotors bereitgestellt werden soll, gemäß dem Aufteilungsmaß zur Ermittlung der ersten Einspritzmengenangabe und der zweiten Einspritzmengenangabe aufgeteilt wird, wobei die erste Einspritzmengenangabe und die zweite Einspritzmengenangabe abhängig von dem ersten bzw. zweiten Adaptionswert, die durch das obige Verfahren angepasst werden, insbesondere durch Addition oder Multiplikation, ermittelt werden.

Weiterhin kann ein Adaptionswert-Offset angepasst werden, wobei der Adaptionswert-Offset gemäß dem Aufteilungsmaß aufgeteilt wird und zur Ermittlung der entsprechenden Einspritzmengenangabe verwendet wird.

Gemäß einer weiteren Ausführungsform kann ein Saugrohr-Adaptionswert-Offset und ein Direkteinspritzungs-Adaptionswert-Offset angepasst werden, mit denen die entsprechende Einspritzmengenangabe beaufschlagt wird.

Weiterhin kann ein Saugrohr-Adaptionswert-Offset und ein Direkteinspritzungs-Adaptionswert-Offset angepasst werden, jeweils mit dem Aufteilungsmaß beaufschlagt werden.

Gemäß einem weiteren Aspekt ist ein nach Anspruch 6 vorgesehen. Gemäß einem weiteren Aspekt ist ein Motorsystem vorgesehen. Das Motorsystem umfasst:

- einen Verbrennungsmotor, und
- das obige Steuergerät.

Gemäß einem weiteren Aspekt ist ein Computerprogrammprodukt vorgesehen, das einen Programmcode enthält, der, wenn er auf einer Datenverarbeitungseinheit ausgeführt wird, das obige Verfahren durchführt.

Kurzbeschreibung der Zeichnungen

Bevorzugte Ausführungsformen werden nachfolgend anhand der beigefügten Zeichnungen näher erläutert. Es zeigen:

Figur 1 eine schematische Darstellung eines Motorsystems mit einem Verbrennungsmotor, der mit zwei Einspritzungsarten betrieben werden kann;

Figur 2 ein Funktionsdiagramm zur Darstellung der Berücksichtigung von Adaptionswerten bei der Bestimmung der Einspritzmenge für die einzelnen Einspritzungsarten;

Figur 3 eine Darstellung der Adaptionsbereiche, in denen eine Anpassung des jeweiligen Adaptionswertes für eine Saugrohreinspritzung und eine Direkteinspritzung vorgenommen werden darf; und

Figur 4 ein weiteres Funktionsdiagramm zur Darstellung der Berücksichtigung von Adaptionswerten bei der Bestimmung der Einspritzmenge für die einzelnen Einspritzungsarten.

Beschreibung von Ausführungsformen

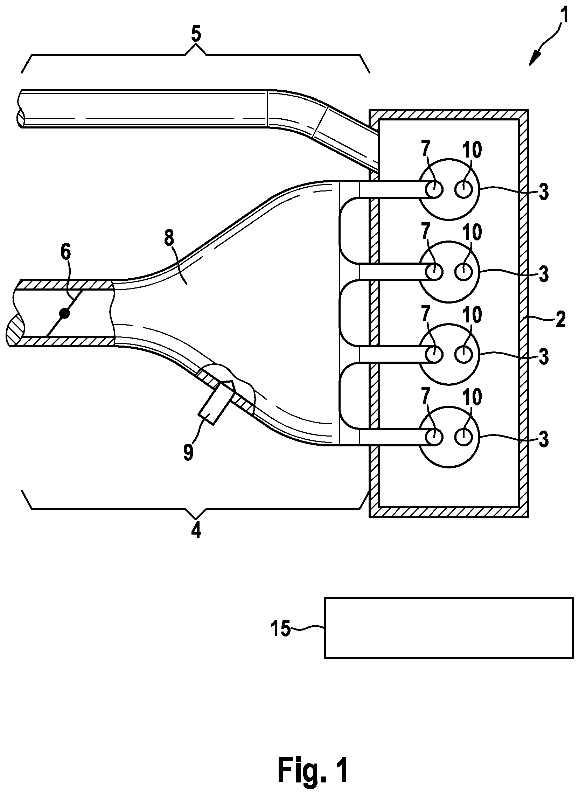

Figur 1 zeigt ein Motorsystem 1 mit einem Verbrennungsmotor 2, der vier Zylinder 3 mit entsprechenden Brennräumen aufweist. Den Zylindern 3 wird Luft über ein Luftzuführungssystem 4 gesteuert durch entsprechende Einlassventile 7 an den Eingängen zu den Brennräumen der Zylinder zugeführt. Verbrennungsabgase werden über entsprechende Auslassventile (nicht gezeigt) und einen Abgasabführungsabschnitt 5 aus den Brennräumen der Zylinder 3 abgeleitet.

In dem Luftzuführungssystem 4 ist eine Drosselklappe 6 angeordnet, die den Luftstrom in die Zylinder 3, d.h. die Luftmenge steuert. In dem Bereich des Luftzuführungssystems 4 zwischen der Drosselklappe 6 und den Einlassventilen 7 der Zylinder 3 ist ein Saugrohr 8 vorgesehen. In dem Saugrohr 8 ist ein Einspritzventil 9 angeordnet, um Kraftstoff bei einem Betrieb des Verbrennungsmotors 2 mit einer Saugrohreinspritzung einzuspritzen. Weiterhin sind die Zylinder 3 mit Direkteinspritzventilen 10 versehen, um Kraftstoff direkt in die Zylinder 3 einzuspritzen. In einer alternativen Ausführungsform kann für jeden der Zylinder 3 ein Saugrohreinspritzventil vorgesehen sein. Die Saugrohreinspritzventile können jeweils in einer jeweiligen Zuführungsleitung zwischen dem Saugrohr 8 und dem entsprechenden Einlassventil 7 vorgesehen sein.

Das Motorsystem 1 umfasst weiterhin ein Steuergerät 15, das die Einspritzventile 9, 10 die Funktion der Einlassventile 7 und Auslassventile, die Drosselklappe 6 und andere Stellgeber des Motorsystems 1 ansteuert, um den Verbrennungsmotor 2 gemäß einer Vorgabe zu betreiben.

Das Steuergerät 15 steuert die Einspritzung von Kraftstoff über die Einspritzventile 9, 10 abhängig vom Betriebspunkt des Verbrennungsmotors an, z.B. abhängig von der Motordrehzahl n und/oder der Last M. Die Ansteuergröße der Einspritzventile 9, 10 ist eine Einspritzmengenangabe, die in entsprechenden Ansteuereinheit für die Einspritzventile 9, 10 in ein Einspritzen einer entsprechenden Menge an Kraftstoff umgesetzt wird. Insbesondere wird durch die Einspritzmengenangabe die Zeitdauer der Einspritzung festgelegt.

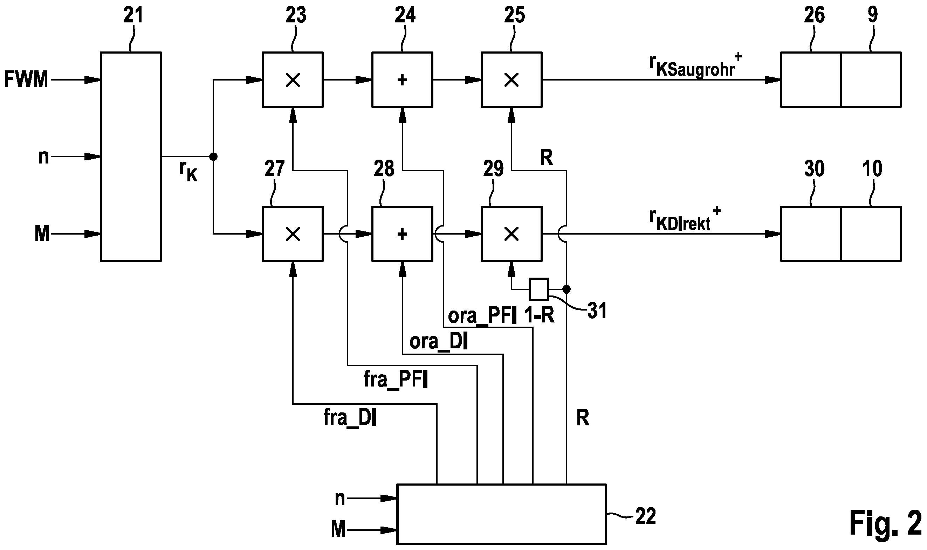

In Figur 2 ist schematisch ein Funktionsdiagramm dargestellt, das veranschaulicht, wie die Einspritzmengenangabe ermittelt werden. In einem Einspritzmengenblock 21 werden abhängig von einem vorgegebenen Fahrerwunschmoment FWM, und einem Betriebspunkt, der beispielsweise durch die Motordrehzahl n und die Motorlast M angegeben ist, eine Gesamteinspritzmenge $r_K$ ermittelt. Die Gesamteinspritzmenge entspricht einer Angabe der Menge an Kraftstoff, die für eine Verbrennung in einen Zylinder eingespritzt werden soll, um ein gewünschtes Drehmoment bereitzustellen. Alternativ kann mit der Gesamteinspritzmenge auch ein gewünschtes Luft-Kraftstoff-Verhältnis (Lambda) bereitgestellt werden.

Für die Ermittlung einer Saugrohr-Einspritzmengenangabe $r_{KSaugrohr}$ für die Saugrohreinspritzung wird die Gesamteinspritzmenge $r_K$ mit einem vorgegebenen Saugrohr-Adaptionswert fra_PFI beaufschlagt, im vorliegenden Ausführungsbeispiel in einem ersten Multiplikationsblock 23 multipliziert. Zu dem so ermittelten Produkt wird in einem ersten Summierglied 24 ein Saugrohr-Adaptionswert-Offset ora_PFI hinzu addiert. Anschließend wird die erhaltene Summe in einem zweiten Multiplikationsblock 25 mit einem Aufteilungsmaß R multipliziert, um die Saugrohr-Einspritzmengenangabe $r_{KSaugrohr}$ zu erhalten, die in einer Saugrohr-Einspritzventil-Ansteuereinheit 26 in eine geeignete Ansteuerung für das Saugrohr-Einspritzventil 9 umgesetzt wird.

Analog wird für die Ermittlung einer Direkteinspritzungs- Einspritzmengenangabe $r_{KDirekt}$ für die Direkteinspritzung die Gesamteinspritzmenge $r_K$ mit einem vorgegebenen Direkteinspritzungs-Adaptionswert fra_DI beaufschlagt, im vorliegenden Ausführungsbeispiel in einem dritten Multiplikationsblock 27 multipliziert. Zu dem so ermittelten Produkt wird in einem zweiten Summierglied 28 ein Direkteinspritzungs-Adaptionswert-Offset ora_DI hinzu addiert. Der Direkteinspritzungs-Adaptionswert-Offset ora_DI kann durch ein weiteres Verfahren ermittelt werden, das beispielsweise auf einer Auswertung des Spannungs- und Stromverlaufs in den Stellgebern der Direkteinspritzventile 10 basiert. Ein solches Verfahren ist aus dem Stand der Technik bekannt und es wird hierin nicht weiter darauf eingegangen.

Anschließend wird die erhaltene Summe in einem vierten Multiplikationsblock 29 mit einem Aufteilungsmaß 1-R multipliziert, um die Direkteinspritzungs-Einspritzmengenangabe $r_{KDirekt}$ zu erhalten, die in einer Direkteinspritzungs-Ansteuereinheit 30 in eine geeignete Ansteuerung für das Direkt-Einspritzventil 10 umgesetzt wird.

Die Saugrohr-Einspritzventil-Ansteuereinheit 26 und die Direkteinspritzungs-Ansteuereinheit 30 können im Steuergerät 15 vorgesehen sein. Der Saugrohr-Adaptionswert-Offset ora_PFI, der Direkteinspritzungs-Adaptionswert-Offset ora_DI, der Saugrohr-Adaptionswert fra_PFI, der Direkteinspritzungs-Adaptionswert fra_DI und das Aufteilungsmaß R werden von einem Adaptionswertblock 22 abhängig von dem Betriebspunkt des Verbrennungsmotors, der durch die Motordrehzahl n und/oder die Motorlast M bestimmt sein kann, und/oder abhängig von einem vorgegebenen oder erlernten Kennfeld bzw. einer vorgegebenen oder erlernten Funktion vorgegeben.

Das von dem Adaptionsfunktionsblock 22 bereitgestellte Aufteilungsmaß R gibt betriebszustandsabhängig d.h. z.B. abhängig von der Drehzahl und/oder Last des Verbrennungsmotors, an, wie die Gesamteinspritzmenge $r_K$ auf die einzelnen Einspritzungsarten aufgeteilt werden soll. Beispielsweise kann eine Saugrohr-Einspritzmengenangabe $r_{KSaugrohr}$ bestimmt werden, in dem die mit dem Saugrohr-Adaptionswert-Offset ora_PFI beaufschlagte adaptierte Gesamteinspritzmenge mit dem Aufteilungsmaß R multipliziert wird, während zum Erhalten der Direkteinspritzungs-Einspritzmengenangabe $r_{KDirekt}$ die mit dem Direkteinspritzungs-Adaptionswert-Offset ora_DI beaufschlagte adaptierte Gesamteinspritzmenge mit dem inversen Aufteilungsmaß 1-R beaufschlagt wird. Das inverse Aufteilungsmaß 1- R ergibt sich aus der Differenz zwischen 1 und dem Aufteilungsmaß R, die in einem Differenzblock 31 ermittelt wird.

Zum Anpassen der so erhaltenen Einspritzmengenangaben $r_{KSaugrohr}$, $r_{KDirekt}$ sind Adaptionswerte fra_PFI (für die Saugrohreinspritzmenge $r_{KSaugrohr}$) und fra_DI (für die Direkteinspritzmege $r_{KDirekt}$) vorgesehen. Die Adaptionswerte fra_PFI, fra_DI werden von dem Adaptionswertblock 22 unter Umständen abhängig von Betriebspunkt (Drehzahl n, Drehmoment M) bereitgestellt. Der Direkteinspritzungs-Adaptionswert-Offset ora_DI und der Direkteinspritzungs-Adaptionswert fra_DI und der Saugrohr-Adaptionswert-Offset ora_PFI und der Saugrohr-Adaptionswert fra_PFI sind in dem Adaptionswertblock 22 gespeichert. Im Wesentlichem ergibt sich die adaptierte Saugrohreinspritzmengenangabe $r_{KSaugrohr*}$ aus der Gesamteinspritzmenge $r_K$ wie folgt:

$$r_{KSaugrohr} = r_K \times R \times fra\_PFI + ora\_PFI \times R$$

Analog ergibt sich die adaptierte Direkteinspritzmenge $r_{KDirekt}$ aus der Gesamteinspritzmenge $r_K$ wie folgt:

$$r_{KDirekt} = r_K \times (1-R) \times fra\_DI + ora\_DI \times (1-R)$$

Die Adaptionswerte werden in dem Adaptionsblock 22 angepasst, wenn bestimmte Betriebspunkte vorliegen. Eine solche Anpassung ist notwendig, um Bauteiltoleranzen und -alterungen zu berücksichtigen. Während dazu bislang vorgesehen ist, die Anpassung der Adaptionswerte für die Saugrohr Einspritzmengenangabe bei einer nahezu vollständigen Saugrohreinspritzung und die Adaption der Direkt-Einspritzmengenangabe bei einer nahezu vollständigen Direkteinspritzung vorzunehmen, sieht das vorgeschlagene Verfahren vor, dass die Anpassung der Adaptionswerte in dem Adaptionsblock 22 vorgenommen wird, sobald ein Betriebszustand vorliegt, der innerhalb eines vorgegebenen Adaptionsbereiches liegt. Der Betriebszustand kann dabei auch einem Mischbetrieb zugeordnet sein, in dem der Verbrennungsmotor betrieben wird. Beispielsweise kann eine Anpassung des Saugrohr- Adaptionswertes vorgenommen werden, wenn das Aufteilungsverhältnis R einen deutlich höheren Anteil der Saugrohreinspritzung vorsieht als der Anteil der Direkteinspritzung, wie z.B. bei einem Aufteilungsmaß R ≥ 70%, ≥ 80% oder ≥ 90%.

Weiterhin wird die Adaption des Saugrohradaptionswertes fra_PFI nur dann vorgenommen, wenn ein ausreichender Abstand von den Betriebspunkten vorhanden ist, bei denen eine Adaption des Direkteinspritzungs-Adaptionswert-Offset ora_DI oder des Saugrohr-Adaptionswert-Offset ora_PFI vorgenommen werden kann.

Die Adaptionswerte können auf verschiedene Arten ermittelt werden. Im einfachsten Fall wird das Luft-Kraftstoff-Verhältnis in Form eines Lambdawerts gemessen und aus der Abweichung zu einem vorgegebenen Sollwert der Adaptionswert ermittelt. Alternativ wird bei einem bestimmten Betriebszustand die Einspritzmenge erhöht bzw. vermindert und die resultierende Reaktion auf die Drehzahl des Verbrennungsmotors ausgewertet. Die Anpassung der Adaptionswerte wird in der Regel durchgeführt, so dass sich der Adaptionswert nicht sprunghaft ändert. Vielmehr wird ein jeweils neu ermittelter Adaptionswert gewichtet und für die Aktualisierung des bestehenden Adaptionswerts durch Addieren oder Multiplizieren verwendet. Auf diese Weise kann der Einfluss einzelner Ausreißer des ermittelten Adaptionswertes reduziert werden.

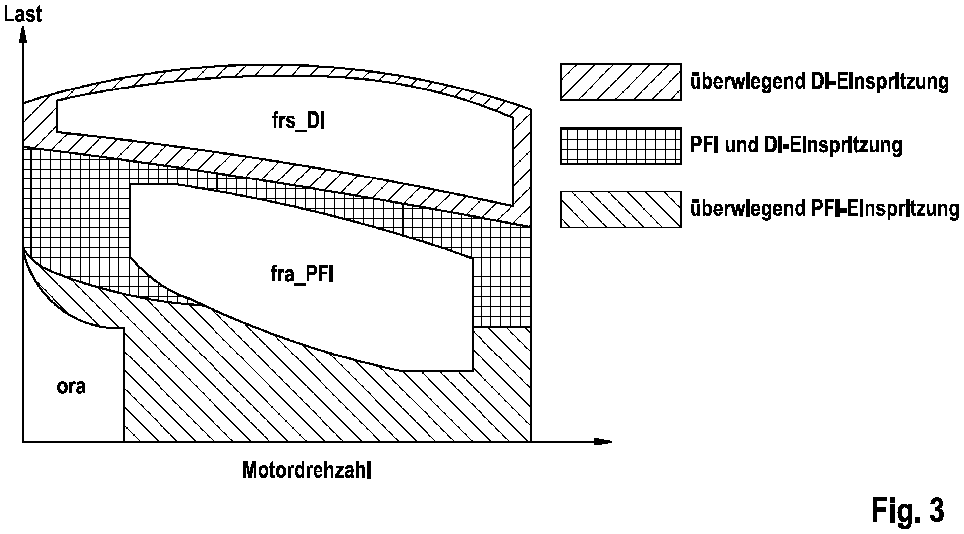

Die Adaptions-Bereiche, in die die Adaptionen vorgenommen werden, sind beispielsweise in Figur 3 dargestellt, wo die entsprechenden Bereiche weiß gekennzeichnet sind. Man erkennt, dass der Saugrohr-Adaptionswert fra_PFI in einem Adaptionsbereich angepasst wird, bei dem die den Adaptionsbereich definierenden Betriebspunkte ein Aufteilungsmaß R vorsehen, bei denen sowohl eine Saugrohreinspritzung als auch eine Direkteinspritzung stattfinden. Weiterhin ist vorgesehen, dass die Anpassung des Direkteinspritzungs-Adaptionswertes bei Betriebsbereichen erfolgt, bei denen - vorgegeben durch das Aufteilungsmaß R - vorwiegend eine Direkteinspritzung auftritt.

Wesentlich ist, dass die Anpassung der Adaptionswerte so erfolgt, dass nur ein Adaptionswert gleichzeitig angepasst wird. Dazu sind die Adaptionsbereiche so zu definieren, dass sich diese für die Adaptionswerte fra_PFI, fra_DI und die Adaptionswert-Offsets ora_PFI, ora_DI nicht überlappen.

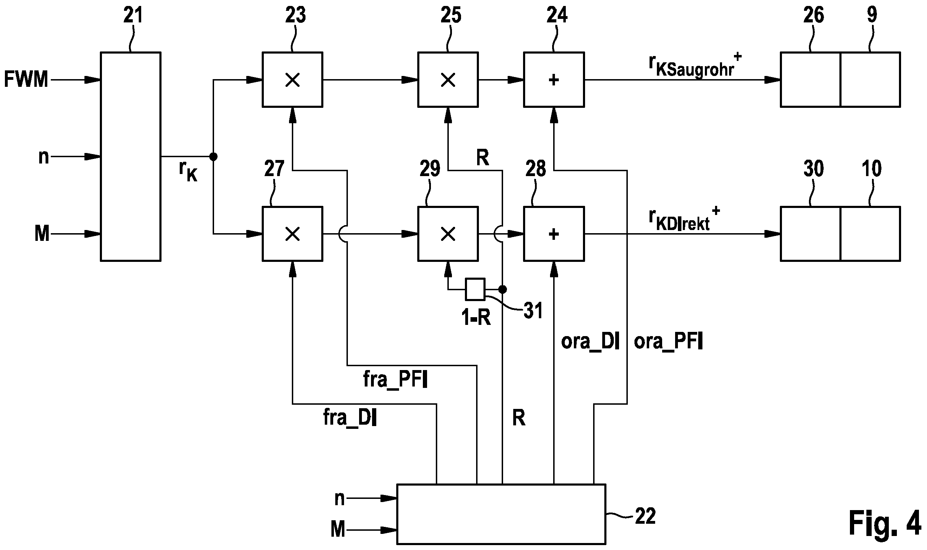

Gemäß einer alternativen Ausführungsform können die Adaptionswert-Offsets ora_DI, ora_PFI zu der Saugrohreinspritzmenge $r_{KSaugrohr}$ bzw. der Direkteinspritzmenge $r_{KDirekt}$ nach der Multiplikation mit den entsprechenden Aufteilungsmaßen berücksichtigt werden, wie es in dem Funktionsdiagramm der Fig. 4 gezeigt ist. Man erkennt, dass hierfür im Wesentlichen die Anordnungen der Blöcke 25, 24 bzw. 28, 29 vertauscht sind.

## Patentansprüche

1. Verfahren zum Anpassen von Adaptionswerten für die Adaption von Kraftstoff-Einspritzmengen eines Verbrennungsmotors (2), dem Kraftstoff durch einen Mischbetrieb von zwei Einspritzungsarten zuführbar ist, wobei eine erste Einspritzungsart einer Saugrohreinspritzung und eine zweite Einspritzungsart einer Direkteinspritzung entsprechen,
wobei ein erster Adaptionswert zum Adaptieren einer ersten Einspritzmengenangabe, gemäß der der Verbrennungsmotor (2) mit der ersten Einspritzungsart betrieben wird, und ein zweiter Adaptionswert zum Adaptieren einer zweiten Einspritzmengenangabe, gemäß der der Verbrennungsmotor (2) mit der zweiten Einspritzungsart betrieben wird, angepasst wird, wobei die Adaptionswerte jeweils in definierten, sich nicht überlappenden betriebszustandsabhängigen Adaptionsbereichen angepasst werden,
wobei der erste Adaptionswert in einem Adaptionsbetriebsbereich angepasst wird, bei denen sowohl eine Saugrohreinspritzung als auch eine Direkteinspritzung stattfindet, wobei der zweite Adaptionswert in einem Adaptionsbetriebsbereich angepasst wird, bei dem Kraftstoff zu mehr als 70%, 80%, 90% oder 95% durch Direkteinspritzung dem Verbrennungsmotor (2) zugeführt wird
wobei die Anpassung des jeweiligen Adaptionswertes erfolgt, indem ein aktueller Adaptionswert für die betreffende Einspritzungsart ermittelt wird, und ein zuvor ermittelter Adaptionswert für die betreffende Einspritzungsart angepasst wird, indem der vorherige Adaptionswert mit dem ermittelten Adaptionswert für die betreffende Einspritzungsart, der mit einem Gewichtungsfaktor gewichtet wird, beaufschlagt wird.

2. Verfahren zum Adaptieren einer ersten Einspritzmengenangabe und einer zweiten Einspritzmengenangabe zum Steuern einer Einspritzung von Kraftstoff in einen Verbrennungsmotor (2), dem Kraftstoff durch einen Mischbetrieb von zwei Einspritzungsarten zugeführt werden kann,
wobei abhängig von einem Betriebspunkt ein Aufteilungsmaß (R) bereitgestellt wird,
wobei eine vorgegebene Gesamtkraftstoffmenge ($r_K$), die für eine Verbrennung in einem Zylinder (3) des Verbrennungsmotors (2) bereitgestellt werden soll, gemäß dem Aufteilungsmaß (R) zur Ermittlung der ersten Einspritzmengenangabe und der zweiten Einspritzmengenangabe aufgeteilt wird, wobei die erste Einspritzmengenangabe und die zweite Einspritzmengenangabe abhängig von dem ersten bzw. zweiten Adaptionswert, die durch das Verfahren nach Anspruch 1 angepasst werden, insbesondere durch Addition oder Multiplikation, ermittelt werden.

3. Verfahren nach Anspruch 2, wobei ein Adaptionswert-Offset (ora_DI, ora_PFI) angepasst wird, wobei der Adaptionswert-Offset (ora_DI, ora_PFI) gemäß dem Aufteilungsmaß (R) aufgeteilt wird und zur Ermittlung der entsprechenden Einspritzmengenangabe verwendet wird.

4. Verfahren nach Anspruch 2, wobei ein Saugrohr-Adaptionswert-Offset (ora_PFI) und ein Direkteinspritzungs-Adaptionswert-Offset (ora_DI) angepasst werden, mit denen die entsprechende Einspritzmengenangabe beaufschlagt wird.

5. Verfahren nach Anspruch 4, wobei ein Saugrohr-Adaptionswert-Offset (ora_PFI) und ein Direkteinspritzungs-Adaptionswert-Offset (ora_DI) angepasst werden, jeweils mit dem Aufteilungsmaß (R) beaufschlagt werden.

6. Steuergerät (15) zum Anpassen von Adaptionswerten für die Adaption von Kraftstoff-Einspritzmengen eines Verbrennungsmotors (2), dem Kraftstoff durch einen Mischbetrieb von zwei Einspritzungsarten zuführbar ist, wobei eine erste Einspritzungsart einer Saugrohreinspritzung und eine zweite Einspritzungsart einer Direkteinspritzung entsprechen, wobei das Steuergerät (15) ausgebildet ist, um einen ersten Adaptionswert zum Adaptieren einer ersten Einspritzmengenangabe, gemäß der der des Verbrennungsmotor (2) mit der ersten Einspritzungsart betrieben wird, und einen zweiten Adaptionswert zum Adaptieren einer zweiten Einspritzmengenangabe, gemäß der der Verbrennungsmotor mit der zweiten Einspritzungsart betrieben wird, anzupassen, wobei die Adaptionswerte jeweils in definierten, sich nicht überlappenden betriebszustandsabhängigen Adaptionsbereichen angepasst werden, wobei der erste Adaptionswert in einem Adaptionsbetriebsbereich angepasst wird, bei dem sowohl eine Saugrohreinspritzung als auch eine Direkteinspritzung stattfindet, wobei der zweite Adaptionswert in einem Adaptionsbetriebsbereich angepasst wird, bei dem Kraftstoff zu mehr als 70%, 80%, 90% oder 95% durch Direkteinspritzung dem Verbrennungsmotor (2) zugeführt wird, wobei die Anpassung des jeweiligen Adaptionswertes erfolgt, indem ein aktueller Adaptionswert für die betreffende Einspritzungsart ermittelt wird, und ein zuvor ermittelter Adaptionswert für die betreffende Einspritzungsart angepasst wird, indem der vorherige Adaptionswert mit dem ermittelten Adaptionswert für die betreffende Einspritzungsart, der mit einem Gewichtungsfaktor gewichtet wird, beaufschlagt wird.

7. Motorsystem (1), umfassend:

    - einen Verbrennungsmotor (2), und
    - ein Steuergerät (15) nach Anspruch 6.

8. Computerprogrammprodukt, das einen Programmcode enthält, der, wenn er auf einem Steuergerät nach Anspruch 6 ausgeführt wird, das Verfahren nach einem der Ansprüche 1 bis 5 durchführt.

## Claims

1. Method for adapting adaptation values for adapting fuel injection quantities in an internal combustion engine (2), to which fuel can be fed by means of a mixed operation of two types of injection, wherein a first type of injection corresponds to an intake manifold injection, and a second type of injection corresponds to a direct injection, wherein a first adaptation value for adapting a first injection quantity, according to the internal combustion engine (2) is operated with the first type of injection, and a second adaptation value for adapting a second injection quantity specification, according to which the internal combustion engine (2) is operated with the second type of injection, are adapted, wherein the adaptation values are respectively adapted in defined adaptation ranges which do not overlap and are dependent on the operating state, wherein the first adaptation value is adapted in an adaptation operating range in which both an intake manifold injection and a direct injection take place, wherein the second adaptation value is adapted in an adaptation operating range in which fuel is fed as more than 70%, 80%, 90% or 95% to the internal combustion engine (2) by direct injection, wherein the adaptation of the respective adaptation value is carried out in that a current adaptation value is determined for the respective type of injection and a previously determined adaptation value for the respective type of injection is adapted in that the determined adaptation value for the respective type of injection, which value is weighted with a weighting factor, is applied to the previous adaptation value.

2. Method for adapting a first injection quantity specification and a second injection quantity specification for controlling an injection of fuel into an internal combustion engine (2) to which fuel can be fed by a mixed operation of two types of injection, wherein an apportionment measure (R) is made available as a function of an operating point, wherein a predefined overall fuel quantity ($r_K$), which is to be made available for a combustion process in a cylinder (3) of the internal combustion engine (2), is apportioned according to the apportionment measure (R) for determining the first injection quantity specification and the second injection quantity specification, wherein the first injection quantity specification and the second injection quantity specification are adapted as a function of the first and second adaptation values which are adapted by the method according to Claim 1, in particular are determined by addition or multiplication.

3. Method according to Claim 2, wherein an adaptation value offset (ora_DI, ora_PFI) is adapted, wherein the adaptation value offset (ora_DI, ora_PFI) is apportioned according to the apportionment measure (R) and is used to determine the corresponding injection quantity specification.

4. Method according to Claim 2, wherein an intake manifold adaptation value offset (ora_PFI) and a direct injection adaptation value offset (ora_DI) which are applied to the corresponding injection quantity specification are adapted.

5. Method according to Claim 4, wherein an intake manifold adaptation value offset (ora_PFI) and a direct injection adaptation value offset (ora_DI) are adapted and each have the apportionment measure (R) applied to them.

6. Control device (15) for adapting adaptation values for adapting fuel injection quantities of an internal combustion engine (2) to which fuel can be fed by means of a mixed operation of two types of injection, wherein a first type of injection corresponds to an intake manifold injection, and a second type of injection corresponds to a direct injection, wherein the control device (15) is designed to adapt a first adaptation value for adapting a first injection quantity specification, according to which the internal combustion engine (2) is operated with the first type of injection, and a second adaptation value for adapting a second injection quantity specification, according to which the internal combustion engine is operated with the second type of injection, wherein the adaptation values are respectively adapted in defined adaptation ranges which do not overlap and are dependent on the operating state, wherein the first adaptation value is adapted in an adaptation operating range in which both an intake manifold injection and a direct injection take place, wherein the second adaptation value is adapted in an adaptation operating range is which fuel is fed as more than 70%, 80%, 90% or 95% to the internal combustion engine (2) by direct injection, wherein the adaptation of the respective adaptation value is carried out in that a current adaptation value is determined for the respective type of injection, and a previously determined adaptation value for the respective type of injection is adapted in that the determined adaptation value for the respective type of injection, which value is weighted with a weighting factor, is applied to the previous adaptation value.

7. Engine system (1), comprising:

   - an internal combustion engine (2), and
   - a control device (15) according to Claim 6.

8. Computer programme product which contains a programme code which, when run on a control device according to Claim 6, carries out the method according to one of Claims 1 to 5.

**Revendications**

1. Procédé pour adapter des valeurs d'adaptation pour l'adaptation de quantités d'injection de carburant d'un moteur à combustion interne (2), auquel du carburant peut être délivré par un fonctionnement mixte de deux types d'injection, dans lequel un premier type d'injection correspond à une injection dans la pipe d'admission et un deuxième type d'injection correspond à une injection directe,

dans lequel une première valeur d'adaptation est adaptée pour adapter une première donnée de quantité d'injection, en fonction de laquelle le moteur à combustion interne (2) est mis en fonctionnement conformément au premier type d'injection, et une deuxième valeur d'adaptation est adaptée pour adapter une deuxième donnée de quantité d'injection, en fonction de laquelle le moteur à combustion interne est mis en fonctionnement conformément au deuxième type d'injection,

dans lequel les valeurs d'adaptation sont à chaque fois adaptées dans des plages d'adaptation définies, dépendant de l'état de fonctionnement et ne se chevauchant pas,

dans lequel la première valeur d'adaptation est adaptée dans une plage de fonctionnement d'adaptation pour laquelle il se produit à la fois une injection dans la pipe d'admission et une injection directe,

dans lequel la deuxième valeur d'adaptation est adaptée dans une plage de fonctionnement d'adaptation pour laquelle du carburant est délivré au moteur à combustion interne (2) à plus de 70 %, 80 %, 90 % ou 95 % par injection directe,

dans lequel l'adaptation de la valeur d'adaptation respective est effectuée en déterminant une valeur d'adaptation actuelle pour le type d'injection concerné, et une valeur d'adaptation déterminée au préalable est adaptée pour le type d'injection concerné en appliquant à la valeur d'adaptation précédente la valeur d'adaptation déterminée pour le type d'injection concerné et pondérée par un facteur de pondération.

2. Procédé pour adapter une première donnée de quantité d'injection et une deuxième donnée de quantité d'injection afin de commander une injection de carburant dans un moteur à combustion interne (2) auquel du carburant peut être délivré par un fonctionnement mixte de deux types d'injection, dans lequel un coefficient de répartition (R) est fourni en fonction d'un point de fonctionnement, dans lequel une quantité de carburant totale prédéterminée ($r_K$), qui doit être fournie pour une combustion dans un cylindre (3) du moteur à combustion interne (2), est répartie en fonction du coefficient de répartition (R) afin de déterminer la première donnée de quantité d'injection et la deuxième donnée de quantité d'injection, dans lequel la première donnée de quantité d'injection et la deuxième donnée de quantité d'injection sont déterminées en fonction de la première ou de la deuxième valeur d'adaptation, qui a été adaptée par le procédé selon la revendication 1, notamment par addition ou par multiplication.

3. Procédé selon la revendication 2, dans lequel un décalage de valeur d'adaptation (ora_DI, ora_PFI) est adapté, dans lequel le décalage de valeur d'adaptation (ora_DI, ora_PFI) est réparti conformément au coefficient de répartition (R) et est utilisé pour déterminer la donnée de quantité d'injection correspondante.

4. Procédé selon la revendication 2, dans lequel un décalage de valeur d'adaptation de pipe d'admission (ora_PFI) et un décalage de valeur d'adaptation d'injection directe (ora_DI) sont adaptés, ledit décalage étant appliqué à la donnée de quantité d'injection correspondante.

5. Procédé selon la revendication 4, dans lequel un décalage de valeur d'adaptation de pipe d'admission (ora_PFI) et un décalage de valeur d'adaptation d'injection directe (ora_DI) sont adaptés et le paramètre de répartition (R) leur est respectivement appliqué.

6. Appareil de commande (15) destiné à adapter des valeurs d'adaptation pour l'adaptation de quantités d'injection de carburant d'un moteur à combustion interne (2), auquel du carburant peut être délivré par un fonctionnement mixte de deux types d'injection, dans lequel un premier type d'injection correspond à une injection dans la pipe d'admission et un deuxième type d'injection correspond à une injection directe, dans lequel l'appareil de commande (15) est conçu pour être mis en fonctionnement pour adapter une première valeur d'adaptation d'une quantité d'injection en fonction de laquelle le moteur à combustion interne (2) est mis en fonctionnement conformément au premier type d'injection, et pour adapter une deuxième valeur d'adaptation pour adapter une deuxième donnée de quantité d'injection en fonction de laquelle le moteur à combustion interne est mis en fonctionnement conformément au deuxième type d'injection, dans lequel les valeurs d'adaptation sont à chaque fois adaptées dans des plages d'adaptation définies dépendant de l'état de fonctionnement et ne se chevauchant pas, dans lequel la première valeur d'adaptation est adaptée dans une plage de fonctionnement d'adaptation pour laquelle il se produit à la fois une injection dans la pipe d'admission et une injection directe, dans lequel la deuxième valeur d'adaptation est adaptée dans une plage de fonctionnement d'adaptation pour laquelle du carburant est délivré au moteur à combustion interne (2) à plus de 70 %, 80 %, 90 % ou 95 % par injection directe, dans lequel l'adaptation de la valeur d'adaptation respective est effectuée en déterminant une valeur d'adaptation actuelle pour le type d'injection concerné, et une valeur d'adaptation déterminée au préalable est adaptée pour le type d'injection concerné en appliquant à la valeur d'adaptation précédente la valeur d'adaptation déterminée pour le type d'injection concerné et pondérée par un facteur de pondération.

7. Système de moteur (1) comprenant :

   - un moteur à combustion interne (2), et
   - un appareil de commande (15) selon la revendication 6.

8. Produit de programme d'ordinateur comportant un code de programme qui, lorsqu'il est exécuté sur un appareil de commande selon la revendication 6, met en oeuvre le procédé selon l'une quelconque des revendications 1 à 5.

**Fig. 1**

Fig. 2

21 · FWM, n, M → $r_K$

23 ×, 24 +, 25 ×, 26 / 9

27 ×, 28 +, 29 ×, 30 / 10

31

$r_{KSaugrohr}^+$

$r_{KDirekt}^+$

R, 1-R

ora_PFI, ora_DI, fra_PFI, fra_DI

22 · n, M

R

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007099425 A1